Europäisches Patentamt

European Patent Office

Office européen des brevets

(19)

(11) Publication number:

**0 383 393**
**A1**

## EUROPEAN PATENT APPLICATION

(21) Application number: 90200312.8

(51) Int. Cl.⁵: **A01D 43/10**

(22) Date of filing: 12.02.90

(30) Priority: 13.02.89 NL 8900337

(43) Date of publication of application:
22.08.90 Bulletin 90/34

(84) Designated Contracting States:
**DE FR GB NL**

(71) Applicant: C. van der Lely N.V.
Weverskade 10 P.O. Box 26
NL-3155 ZG Maasland(NL)

(72) Inventor: Van der Lely, Cornelis
7, Brüschenrain
Zug(CH)

(74) Representative: Mulder, Herman et al
Octrooibureau Van der Lely N.V. Weverskade
10 P.O. Box 26
NL-3155 ZG Maasland(NL)

(54) **A mowing machine.**

(57) A mowing machine comprises a crusher member (18) driven about a shaft (20) extending transversely to the direction of operative travel. The crusher member (18) co-operates with a plurality of individually adjusting co-operating members (19) to realize a more uniform crushing action in the case that the thickness of the crop flow to be crushed is not the same along the entire width of the machine. To ensure a light construction the crusher member (18) includes a tubular construction (21) which is fitted with plate-shaped blades (22).

Fig.3

## A MOWING MACHINE

The present invention relates to a mowing machine comprising at least one crusher member which is adapted to be driven about a shaft extending transversely to the direction of operative travel.

In practice, the situation occurs that the thickness of the crop to be crushed in such a mowing machine, i.e. the thickness of the flow of crop between the members effecting the crushing action, is not the same along the entire width of the machine. It is an object of the invention, particularly when such situations occur, to realize a more uniform crushing action.

According to the invention, the mowing machine of the above-defined type is characterized in that the crusher member co-operates with a plurality of individually adjusting co-operating members. Thus, it can be achieved that, taken over the working width of the machine, the space between the crusher member and the individual co-operating members adjusts itself, as regards size, to the varying thickness of the crop to be crushed.

So as to ensure that the crusher member can be of a light construction and can easily be driven at a high number of revolutions, in accordance with the invention, a special embodiment of the crusher member includes a tubular construction which, at least approximately parallel to the rotary shaft of the crusher member, is fitted with plate-shaped blades. More generally, the invention therefore also relates to a mowing machine comprising at least one crusher member which is adapted to be driven about a shaft extending transversely to the direction of operative travel, characterized in that the crusher member includes a tubular construction which, at least approximately parallel to the rotary shaft of the crusher member, is fitted with plate-shaped blades.

According to the invention, the tubular construction may comprise a square tube, while, also according to the invention, radially extending plates may be arranged at the corners of the tube. Preferably, four of such plates are present. In addition, in accordance with the invention, two of these plates may be clamped pairwise against each other by means of a U-shaped strip and a bolt. Also in accordance with the invention, the plates may be provided with plate-shaped tines. Moreover, according to the invention, the plates may be of such a structure that they produce an upward air flow. More generally, the crusher member may include means which, when the machine is operative, produce an air flow, by means of which the mown crop can be moved easily into the space between the crusher member and the co-operating members. The invention therefore also relates to a mowing machine comprising at least one crusher member which is adapted to be driven about a shaft extending transversely to the direction of operative travel, characterized in that the crusher member includes means which, when the mowing machine is operative, produce an air flow.

According to the invention, plate-shaped blades may be detachably attached to the crusher member, which facilitates a substitution thereof. The invention therefore also relates to a mowing machine comprising at least one crusher member which is adapted to be driven about a shaft extending transversely to the direction of operative travel, characterized in that plate-shaped blades are detachably attached to the crusher member.

According to the invention, the crusher member co- operates with a movable co-operating member at the leading side of the machine. In a preferred embodiment in accordance with the invention, this co-operating member includes a curved plate which may be reinforced by means of ribs. Furthermore, in accordance with the invention, the co-operating member may be provided with an adjustable spring, by means of which the co-operating member can be mounted in the mowing machine frame capably of pivoting under spring action. As has already been stated in the foregoing, the crusher member co-operates with a plurality of co-operating members; in accordance with the invention, one co-operating member is provided for every two cutter discs of the mowing machine, so that a machine having six cutter discs includes three such co-operating members arranged in a side-by-side relationship.

Preferably, the above-defined crusher member has a diameter of 25 cms, while its working width is at least approximately equal to that of the mowing unit in the mowing machine; preferably, this working width is at least approximately two metres. The above-defined mowing machine is furthermore provided with coupling points for connection thereof to the coupling points of a three-point lifting hitch, while furthermore the mowing machine is drivable from the power take-off shaft of a tractor.

For a better understanding of the invention and to show how the same may be carried into effect, reference will now be made, by way of example, to some embodiments shown in the accompanying drawings, in which:

Figure 1 is a plan view of a mowing machine according to the invention, connected to a tractor;

Figure 2 is, to an enlarged scale, a portion of the plan view of Figure 1;

Figure 3 is an elevational view of the mowing machine shown in Figure 1;

Figure 4 is a cross-sectional view of the crusher rotor of the crop processing implement in accordance with the invention;

Figure 5 is a portion of a rear view of the crusher rotor shown in a cross-sectional view in Figure 4;

Figure 6 is a bottom view of a portion of the cutter unit of the mowing machine according to the invention;

Figure 7 is a cross-sectional view of the cutter unit;

Figure 8 shows a portion of a longitudinal section through the cutter unit, and

Figure 9 is a cross-sectional view of a further embodiment of the cutter unit.

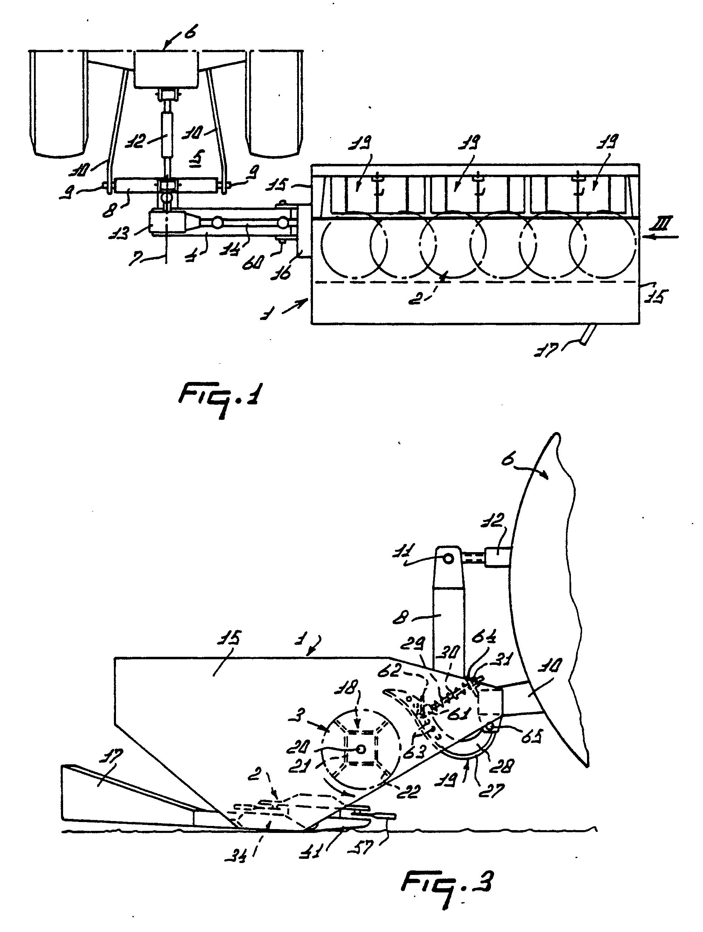

The mowing machine 1 shown in the drawings includes a cutter unit 2 and a crop processing implement 3. The assembly of the cutter unit 2 and the crop processing unit 3 is connected capably of pivoting about an approximately horizontal pivot shaft 60 extending in the direction of operative travel to a carrier arm 4, by means of which the mowing machine 1 can be coupled to the three-point lifting hitch 5 of a tractor or a similar vehicle 6, as is shown in Figure 1. In addition, the carrier arm 4 is connected to a lower carrier beam of a trestle 8 in such a manner that it is capable of pivoting about an approximately horizontal pivot shaft which extends in the direction of operative travel and whose centre line in Figure 1 is denoted by reference numeral 7. At its lower side, the trestle 8 is connected by means of coupling elements 9 to the lifting arms 10 and at its upper side by means of a coupling element 11 to the top rod 12 of the three-point lifting hitch 5. The drive of the cutter unit 2 and of the crop processing implement 3 is effected from the power take-off shaft of the tractor 6 via various transmission members accommodated in the box 13 connected to the carrier arm 4, the intermediate shaft 14 provided with universal joints and various transmission members accommodated in the box 16 connected to the frame 15 of the mowing machine 1.

The one side of the cutter unit 2 is connected rigidly to the frame 15 and the other is provided with a crop guiding element 17. The frame 15 furthermore includes the crop processing implement 3. This crop processing implement comprises a crusher member 18 and a plurality of individually adjusting co-operating members 19 co-operating therewith.

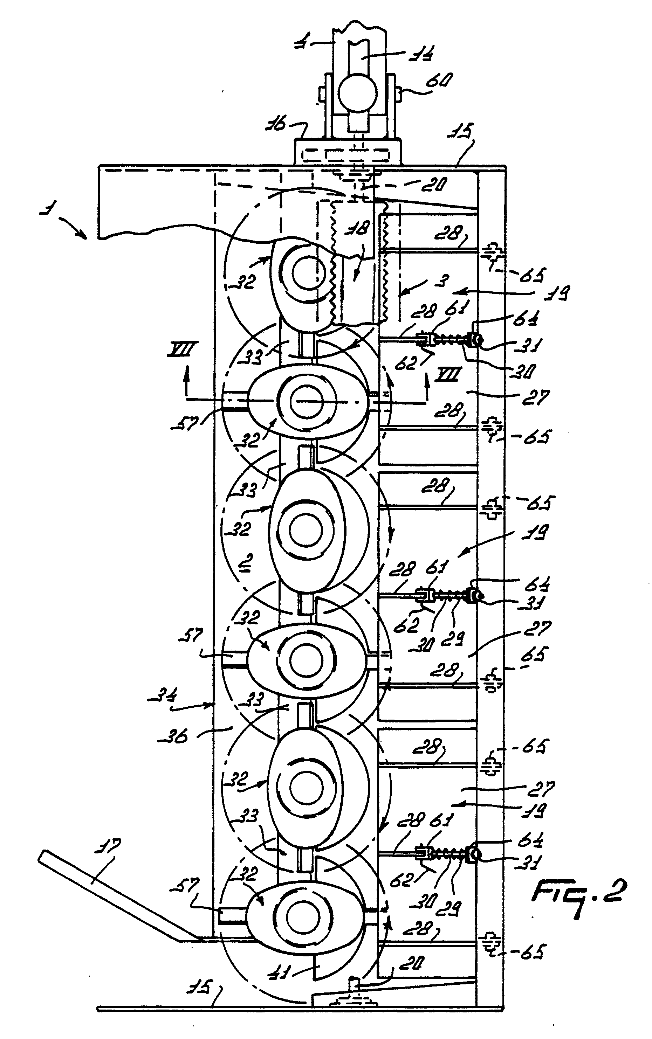

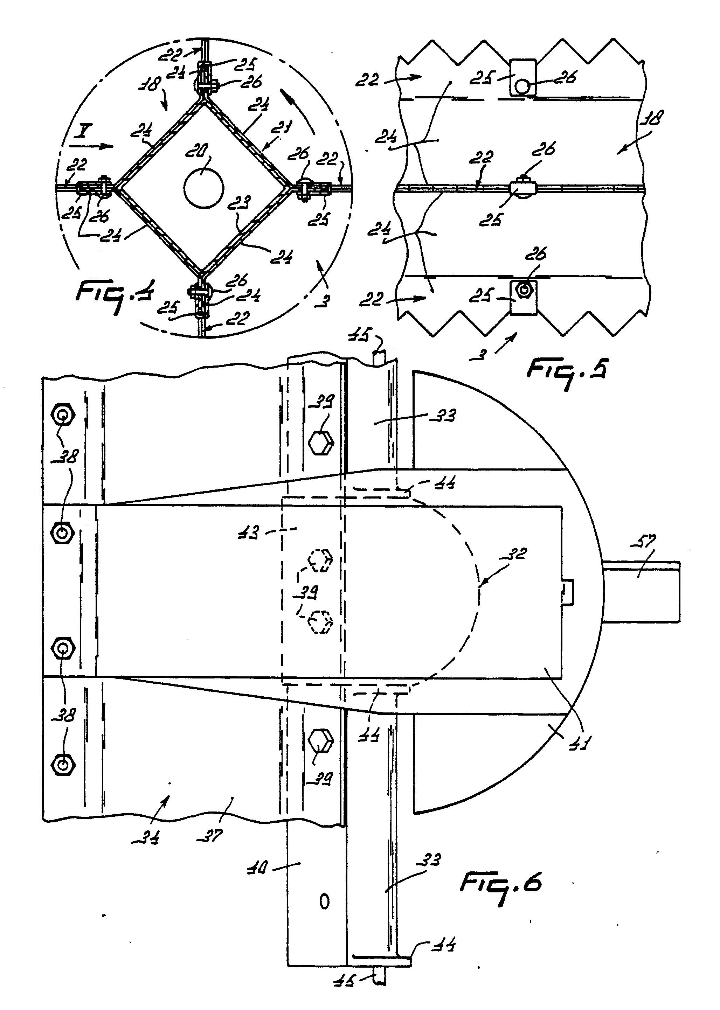

The crusher member 18 (see Figures 3 to 5) is connected to the frame 15 capably of rotation about a rotor shaft 20 and includes a tubular construction 21 which, at least approximately parallel to the rotary shaft of the crusher member 18, is fitted with plate-shaped blades 22. The tubular structure 21 may be formed from a square tube 23 having as plate-shaped blades extending therealong and at the corners thereof radially outwardly directed profiled plates 24. When a quadrangular tube is employed, four of such plates are provided. It will be obvious that, in addition to the preferred embodiment as described, other polygonal tube structures provided at their corners with radially outwardly extending plates may be employed alternatively. In the construction shown, each time two plates 24 are clamped together by means of U-shaped strips 25 and bolts 26 (Figure 5). Consequently, the plate-shaped blades 22 and, in particular, the plates 24 can easily be detached and replaced, if necessary. The plates 24 are provided with plate-shaped tines which e.g. are triangular in shape. When the mowing machine is operative, the crusher member 18 and in particular the plates 24 produce an upward air flow in the direction of rotation. When the mowing machine is in operation, it is in a position transversely to the direction of operative travel, while the crop processing implement 3 is disposed in front of the cutter unit 2. The mown crop is deflected forwardly by the crusher member 18, whereafter the stalks, their feet extending upwardly, are forced upwardly by the air flow through the space between the crusher member 18 and the co-operating members 19 arranged in front of and above them, which crusher member 18 and co-operating members 19 together realize the desired extent of crop crushing. In the embodiment shown (Figures 2 and 3) there are indicated three co-operating member 19. Each co-operating member 19 includes a curved plate 27 which by means of pivot pins 65 is suspended pivotably from the frame 15 and is provided with ribs 28, as well as an adjustable spring 29 arranged about a shaft 30. At its one end, the shaft 30 is provided with a forked section 21, with the aid of which this end of the shaft can be secured in one of the apertures 63 in the centremost rib of the co-operating member 19 by means of a pin 62. At its other end, the shaft 30 is passed through an aperture in a support 64 connected to the frame 15 and at one side thereof is locked by means of a nut 31, while the spring 29 arranged about the shaft 30 urges against the other side of the support 64. Thus, the curved plates 27 are disposed such in the frame 15 that they are under spring action and adjustably so by means of the apertures 63. Consequently, along the width of the crop processing implement 3 the space between the crusher member 18 and the individual co-operating members 19 can be adjusted to the thickness of the crop flow to be crushed, which thickness may vary across the width of the machine. In the embodiment shown, the cutter unit has six mowing discs, so that for every two mowing discs there is present one co-operating member. In this embodiment, the working width of the cutter unit 2 is at least substantially equal to that of the crop processing implement 3, i.e. approximately two metres. The diameter of the crusher member is approximately 25 cms.

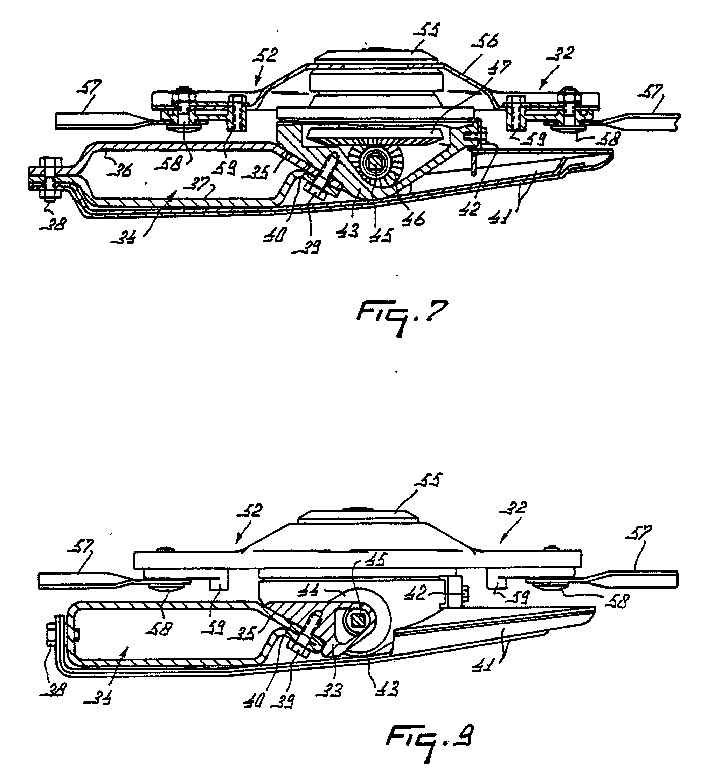

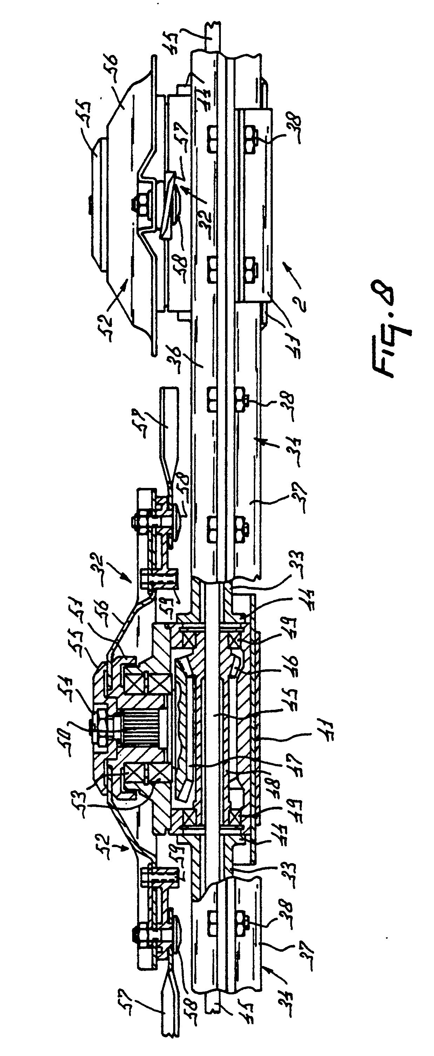

The cutter unit 2, a first embodiment of which is illustrated in Figures 6 to 8 and a second embodiment is shown only as a cross-sectional view in Figure 9, comprises mowing members 32 and intermediate members 33 which are connected to a tubular structure 34. The tubular structure 34 is formed such that at its leading side it has a wall 35 which deviates from the vertical, in particular an oblique one. The tubular structure may be assembled from two detachable sections 36 and 37 (see Figure 7), which sections are shaped such that together they enclose a hollow space. At the rear side, the two sections are folded together to form a double wall and are interconnected by means of bolts 38. The leading sides of the two sections are shaped such that they are contiguous to each other, as a result of which the leading side of the tubular structure 34 has a double wall, which two sections may be interconnected by belts 39. With the aid of these bolts 39 also the mowing members 32 and the intermediate members 33 may be secured to the tubular structure, whereby, as these members, too, have a certain torsional stiffness, the torsional stiffness of the tubular structure together with the mowing members connected thereto is increased as well. To that end the mowing members 32 and the intermediate members 33 also have an oblique wall 40 which bears against the wall 35 of the tubular structure 34. The tubular structure is furthermore of such a type that the belts 38 and 39 are easily accessible, i.e. the bolts 38 from the rear side and the belts 39 from the bottom side. In the embodiments shown, the bolts 38 at the rear side are also used to secure mowing shoes 41 onto the bottom of the mowing members 32. At their leading sides, these mowing shoes are secured to the mowing members 32 by means of bolts 42.

A mowing member 32 consists of a housing 43 which is detachable relative to the contiguous intermediate members 33; the intermediate members 33 bear against the housing 43 with their side flanges 44 only. Through the housing 43 passes the drive shaft 45, which shaft has a square cross-section, although it may alternatively be of a hexagonal structure. This drive shaft constitutes a through-shaft which entirely by-pass the tubular structure. Inside the housing 43 there are accommodated two conical gearwheels 46 and 47. The conical gearwheel 46 forms an integral whole with a sleeve 48, which sleeve extends through substantially the entire length of the housing around the shaft 45 present therein. The sleeve 48 cum gearwheel 46 is supported in bearings 49 arranged on both sides in the housing 43. The conical gearwheel 47 is connected rigidly to an upwardly extending shaft 50, to which the inner bushing 51 of the mowing disc 52 is connected via splines. The inner bushing 51 is accommodated in the housing 43 capably of rotation by means of bearings 53. Between the inner bushing 51 and a cover plate 55 there is secured the disc-shaped plate 56 of the mowing disc 52, the said cover plate 55 being connected to the shaft 50 via a bolt 54. On the disc-shaped plate 56 there are arranged diametrically opposite each other two mowing knives 57. The mowing knives 57 are freely rotatable about pins 58 and their movement is limited by a stop 59.

The drive shaft 45 is driven at a high number of revolutions, whereafter the conical gearwheels introduce a speed reduction by a factor of approximately two to three. Consequently, a relatively low torsion moment in the drive shaft 45 is sufficient and it may have a small cross-section. The number of revolutions of the drive shaft 45 must, of course, be increased considerably compared with the number of revolutions of the power take-off shaft in the box 16, while in the mowing members the number of revolutions of the mowing discs is reduced again relative to that of the drive shaft.

In the embodiment shown in Figure 9, the tubular construction 34 is made as an integral whole by folding it in such a manner that a hollow space is enclosed, while the two walls again constitute a double wall having an obliquely downwardly and forwardly extending face. In this design, the mowing shoes 41 are fitted against the upwardly extending rear wall of the tubular structure. In all further respects the housing 43 of the mowing members is identical to that shown in Figure 7; the cross-sectional view has only been taken in a different position in the cutter unit.

It should furthermore be noted that the tubular structure may also be formed by a beam having an oblique wall at its leading side. This beam will then again have a width which is approximately the same as that of the mowing machine. The mowing members and the intermediate members may then be fitted to this beam.

Demounting of the mowing unit is simplified significantly by this structure; to that end the drive shaft 45 is first drawn from the mowing unit, whereafter the bolts 38 and 42 of the mowing shoes can be detached. After removal of the mowing shoes, the bolts 39 are accessible. By loosening only two bolts, the relevant mowing member 32 can be removed from the tubular structure 34, the assembly of the further component parts of the mowing unit remaining unaltered completely.

Claims

1. A mowing machine comprising at least one crusher member (18) which is adapted to be driven about a shaft (20) extending transversely to the direction of operative travel, characterized in that the crusher member (18) co-operates with a plurality of individually adjusting co-operating members (19).

2. A mowing machine as claimed in claim 1, characterized in that the crusher member (18) includes a tubular construction (21) which, at least approximately parallel to the rotary shaft (20) of the crusher member (18), is fitted with plate-shaped blades (22).

3. A mowing machine comprising at least one crusher member (18) which is adapted to be driven about a shaft (20) extending transversely to the direction of operative travel, characterized in that the crusher member (18) includes a tubular construction (21) which, at least approximately parallel to the rotary shaft (20) of the crusher member (18), is fitted with plate-shaped blades (22).

4. A mowing machine was claimed in claim 2 or 3, characterized in that the tubular construction (21) comprises a square tube (23).

5. A mowing machine as claimed in claim 4, characterized in that plates (24) are arranged radially at the corners of the tube (23).

6. A mowing machine as claimed in claim 5, characterized in that four plates (24) are present.

7. A mowing machine as claimed in claim 5 or 6, characterized in that wo plates (24) are clamped pairwise against each other by means of a U-shaped strip (25) and a bolt (26).

8. A mowing machine as claimed in claim 5, 6 or 7, characterized in that the plates (24) are provided with plate-shaped tines.

9. A mowing machine as claimed in any one of claims 5 to 8, characterized in that the plates (24) are of such a structure that they produce an upward air flow.

10. A mowing machine as claimed in any one of the preceding claims, characterized in that plate-shaped blades (22) are detachably attached to the crusher member (18).

11. A mowing machine as claimed in any one of the preceding claims, characterized in that the crusher member (18) co-operates with a movable co-operating member (19) arranged at the leading side of the machine.

12. A mowing machine as claimed in claim 11, characterized in that the co-operating member (19) includes a curved plate (27).

13. A mowing machine as claimed in claim 12, characterized in that the curved plate (27) is reinforced by means of ribs (28).

14. A mowing machine as claimed in claim 11, 12 or 13, characterized in that the co-operating member (19) includes an adjustable spring (29).

15. A mowing machine as claimed in any one of claims 11 to 14, characterized in that one co-operating member (19) is provided for every two cutter discs (52) of the mowing machine.

16. A mowing machine as claimed in any one of the preceding claims, characterized in that the crusher member (18) has a diameter of approximately 25 cms.

17. A mowing machine as claimed in any one of the preceding claims, characterized in that the working width of the crusher member (18) is at least approximately equal to that of the mowing unit (2) in the mowing machine.

18. A mowing machine as claimed in any one of the preceding claims, characterized in that the working width of the mowing unit (2) in the mowing machine and that of the crusher member (18) is at least approximately two metres.

FIG.1

FIG.3

FIG.2

FIG.4

FIG.5

FIG.6

Fig. 7

Fig. 9

Fig. 8

European Patent Office

# EUROPEAN SEARCH REPORT

**Application Number**

EP 90 20 0312

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | NL-A-8701155 (VAN DER LELY) <br> * the whole document * | 1, 11, 12, 14, 15 | A01D43/10 |
| Y | | 2-5, 8-10 | |
| A | | 17, 18 | |
| Y | US-A-2906076 (MCCARTY) <br> * column 3, line 48 - column 3, line 58 * <br> * column 5, line 9 - column 5, line 20 * <br> * column 5, line 60 - column 5, line 70 * <br> * column 6, line 3 - column 6, line 8 * | 2-5, 8-10 | |
| A | EP-A-258930 (VAN DER LELY) <br> * the whole document * | 1, 14 | |
| A | EP-A-262742 (VAN DER LELY) <br> * column 5, line 40 - column 6, line 20; figure 6 * | 2-4 | |
| A | WO-A-8602521 (KLINNER) <br> * page 5, line 4 - page 5, line 25 * | 2, 3, 8 | TECHNICAL FIELDS SEARCHED (Int. Cl.5) |
| A | DE-A-3446321 (CLAAS) | | A01D |
| A | GB-A-2056835 (ZWEEGERS) | | |
| A | US-A-2217809 (PADRICK) | | |
| A | US-A-2953885 (RICHEY) | | |

The present search report has been drawn up for all claims

| Place of search | Date of completion of the search | Examiner |
|---|---|---|
| THE HAGUE | 02 MAY 1990 | DE LAMEILLIEURE D. |